# EUROPÄISCHE PATENTSCHRIFT

(11) **EP 1 866 606 B1**
(45) Veröffentlichungstag und Bekanntmachung des Hinweises auf die Patenterteilung: **29.04.2009**
(21) Anmeldenummer: 06708032.5
(22) Anmeldetag: 06.02.2006
(51) Int. Cl.: G01D 5/14, H02K 29/08

(54) **LAGESENSORSYSTEM**
POSITION SENSOR SYSTEM
SYSTEME DE DETECTION DE POSITION

(30) Priorität: 31.03.2005 DE 102005015141
(43) Veröffentlichungstag der Anmeldung: 19.12.2007
(73) Patentinhaber: ROBERT BOSCH GMBH, 70442 Stuttgart (DE)
(72) Erfinder: JAERVELAEINEN, Tero, 77815 Buehl (DE); SCHMITT, Gilles, F-67100 Strasbourg (FR)
(86) Internationale Anmeldenummer: PCT/EP2006/050685
(87) Internationale Veröffentlichungsnummer: WO 2006/103132

(56) Entgegenhaltungen:
- DE-A1- 10 054 530

## Beschreibung

Die vorliegende Erfindung betrifft ein Lagesensorsystem zur Detektion einer absoluten elektrischen Winkellage einer Rotorachse eines Elektromotors in einer vorbestimmten Winkelauflösung. Die vorliegende Erfindung betrifft weiterhin ein Motor-Steuerungssystem mit einem EC-Motor, der mit Hilfe eines solchen Lagesensorsystems gesteuert wird.

### Stand der Technik

Für die Positionserfassung und Ansteuerung von blockkommutierten EC-Motoren werden typischerweise drei Hall-Sensoren benutzt, die digitale Signale bereit stellen. Die drei Hall-Sensoren liefern beispielsweise bei einer einpolpaarigen Gebermagnetanordnung eine eindeutige Zuordnung zu sechs Positionsbereichen, von denen jeder 60° aufweist. Durch diese Detektion der absoluten elektrischen Lage ist sichergestellt, dass schon beim Einschalten des EC-Motors der Lagewinkel (d. h. die elektrische Lage des Rotors bzgl. der Positionsbereiche) eindeutig identifiziert werden kann, so dass ein EC-Motor mit einer Anzahl von Statorspulen optimal angesteuert werden kann. Wenn eine genauere Erfassung des Lagewinkels notwendig ist oder wenn spezielle Kommutierungsarten (150° Blocklänge anstelle der üblichen 120° oder 180° Blocklänge) benutzt werden sollen, kann es notwendig sein, die Auflösung der Positionsbereiche zu verdoppeln, so dass zwölf Positionsbereiche für eine elektrische Umdrehung, die jeweils eine Größe von 30° aufweisen, vorgesehen sind.

Dokument DE 10054530 A1 bechreibt ein Verfahren zur Ermittlung der Winkellage einer drehbaren Welle.

Bisherige Lagesensorsysteme mit einer Winkelauflösung von 30° weisen neben einer ersten Hall-Sensoreinrichtung mit den drei Hall-Sensoren und der einpolpaarigen Gebermagnetanordnung eine zweite Hall-Sensoreinrichtung auf, die zwei zweite Hall-Sensoren und eine zweite dreipolpaarige Gebermagnetanordnung aufweist. Die Gesamtzahl von benötigten Hall-Sensoren beträgt hierbei fünf. Dadurch werden die Kosten des Lagesensorsystems und der Herstellungsaufwand erhöht.

Es ist Aufgabe der vorliegenden Erfindung, ein Lagesensorsystem zur Detektion einer absoluten Winkellage zur Verfügung zu stellen, bei dem die Anzahl der Hall-Sensoren reduziert ist.

Es ist weiterhin Aufgabe der vorliegenden Erfindung, ein Lagesensorsystem für ein Motorsteuerungssystem zur Verfügung zu stellen, mit dem ein EC-Motor in einfacher Weise angesteuert werden kann.

Diese Aufgabe wird durch das Lagesensorsystem nach Anspruch 1 sowie durch das Motorsteuerungssystem nach Anspruch 7 gelöst.

Weitere vorteilhafte Ausgestaltungen der Erfindung sind in den abhängigen Ansprüchen angegeben.

Gemäß einem ersten Aspekt der vorliegenden Erfindung ist ein Lagesensorsystem zur Detektion einer absoluten elektrischen Winkellage einer Rotorachse eines Elektromotors in einer vorbestimmten Winkelauflösung vorgesehen. Das Lagesensorsystem umfasst eine erste Hall-Sensoreinrichtung, die eine erste an der Rotorachse angeordnete Gebermagnetanordnung mit einer Anzahl j von Polpaaren und zwei erste Hall-Sensoren aufweist, die physikalisch mit einem Winkelversatz von 90° geteilt durch die Anzahl j der Polpaare bezüglich der Rotorachse angeordnet sind, um eine Auflösung der elektrischen Winkellage von 90° zu erreichen. Das Lagesensorsystem umfasst eine zweite Hall-Sensoreinrichtung, die eine zweite an der Rotorachse angeordnete Gebermagnetanordnung mit n-Polpaaren und einer Anzahl m von zweiten Hall-Sensoren aufweist, die zueinander winkelversetzt bezüglich der zweiten Rotorachse angeordnet sind, wobei die Anordnung und die Anzahl n der Polpaare und die Anordnung und die Anzahl m der Hall-Sensoren vorgesehen sind, um innerhalb des Winkelversatzes der ersten Hall-Sensoren Winkelabschnitte der mit vorbestimmten Winkelauflösung eindeutig zu detektieren.

Ein solches Lagesensorsystem ermöglicht die Detektion der absoluten elektrischen Winkellage bei einer reduzierten Anzahl der Hall-Sensoren in der ersten und zweiten Hall-Sensoreinrichtung im Vergleich zu Lagesensorsystemen mit gleicher Auflösung gemäß dem Stand der Technik.

So ist gemäß einer Ausführungsform der Erfindung vorgesehen, dass die erste Gebermagnetanordnung einpolpaarig ausgeführt ist und die zweite Gebermagnetanordnung drei Polpaare aufweist und zwei zweite Hall-Sensoren in der zweiten Hall-Sensoreinrichtung vorgesehen sind, wobei die zwei Hall-Sensoren in einem Winkel von 30° elektrisch zueinander bezüglich der Rotorachse angeordnet sind. Auf diese Weise ist ein Lagesensorsystem mit einer vorbestimmten Winkelauflösung von 30° elektrisch realisierbar, das lediglich vier Hall-Sensoren aufweist und damit weniger als beim eingangs erwähnten Stand der Technik.

Vorzugsweise ist zumindest einer der zweiten Hall-Sensoren im selben Winkel bezüglich der Rotorachse angeordnet wie einer der ersten Hall-Sensoren. Dies ermöglicht es, dass die Winkelabschnitte innerhalb der Lagewinkelauflösung (elektrisch) von 90° die gleiche Größe aufweisen. Alternativ kann vorgesehen sein, dass einer der zweiten Hall-Sensoren im selben Winkel bezüglich der Rotorachse angeordnet ist, wie ein Grenzbereich zwischen den Polen des Polpaares der ersten Gebermagnetanordnung.

Weiterhin kann eine Auswerteeinheit vorgesehen sein, die mit den ersten und mit den zweiten Hall-Sensoren verbunden ist, um abhängig von Ausgangssignalen der Hall-Sensoren die absolute Winkellage bereit zu stellen.

Gemäß einem weiteren Aspekt der vorliegenden Erfindung kann ein Motorsteuerungssystem mit einem EC-Motor mit einer Rotorachse und mit einem Lagesensorsystem vorgesehen sein. Dabei sind die Hall-Sensoreinrichtungen so an der Rotorachse angeordnet, das eine Änderung der detektierten, von der Auswerteeinheit ermittelten absoluten Winkellage als Trigger für eine Kommutierung des EC-Motors verwendet wird.

Bevorzugte Ausführungsformen der Erfindung werden nachfolgend anhand der beigefügten Zeichnungen näher erläutert. Es zeigen:
- Figur 1: eine schematische Ansicht eines EC-Motors mit einem Lagesensorsystem gemäß dem Stand der Technik;
- Figur 2a: ein Lagesensorsystem für einen EC-Motor gemäß dem Stand der Technik;
- Figur 2b: ein Signal-Zeit-Diagramm für die Ausgangssignale der Hall-Sensoren des Lagesensorsystems der Figur 2a;
- Figur 3a: eine schematische Darstellung eines Lagesensorsys- tems gemäß einer bevorzugten Ausführungsform der Erfindung;
- Figur 3b: ein Signal-Zeit-Diagramm der Ausgangssignale der Hall-Sensoren des Lagesensorsystems der Figur 3a, und
- Figur 4: ein Motorsteuerungssystem mit einem EC-Motor und einem Lagesensorsystem gemäß einer weiteren Ausfüh- rungsform der Erfindung.

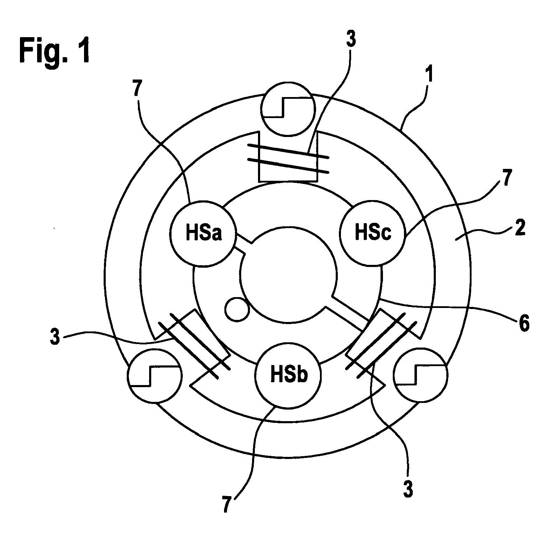

In Figur 1 ist eine schematische Darstellung eines Motorsystems 1 gezeigt, das eine Rotorachse 4 und einen Stator 2 aufweist, an dem drei Statorspulen 3 mit einem Winkelversatz von 120° angeordnet sind. An der im Inneren des Stators 2 angeordneten Rotorachse 4 befindet sich eine einpolpaarige oder mehrpolpaarige Permanentmagnetanordnung (nicht gezeigt), die mit den Statorspulen 3 an dem Stator 2 zusammenwirkt, um eine Drehbewegung des Rotors hervorzurufen.

An der Rotorachse 4 ist ein Lagesensorsystem angeordnet, das eine erste Gebermagnetanordnung 6 aufweist. In den Darstellungen sind der Deutlichkeit halber die Pole der Polpaare der Gebermagnetanordnung durch eine Linie voneinander getrennt gezeigt. Nahe der ersten Gebermagnetanordnung 6 sind Hall-Sensoren 7 angeordnet, so dass die Pole der ersten Gebermagnetanordnung 6 an den Hall-Sensoren 7 beim Drehen der Rotorachse entlang gleiten, wobei beim Wechsel der Polarität der ersten Gebermagnetanordnung 6, die an dem jeweiligen Hall-Sensor 7 vorbeiläuft, eine Signalflanke generiert wird.

Die Gebermagnetanordnung weist in der Regel die gleiche Anzahl von Polpaaren auf wie die Permanentmagnetanordnung. Auch kann die Permanentmagnetanordnung als Gebermagnetanordnung genutzt werden.

Ein Lagesensorsystem mit einer einpolpaarigen Gebermagnetanordnung und drei um 120° bezüglich der Rotorachse 4 winkelversetzte Hall-Sensoren 7 ermöglicht eine Winkelauflösung von 60°, die ausreichend ist, die Spulenanordnungen 3 in geeigneter Weise zu kommutieren.

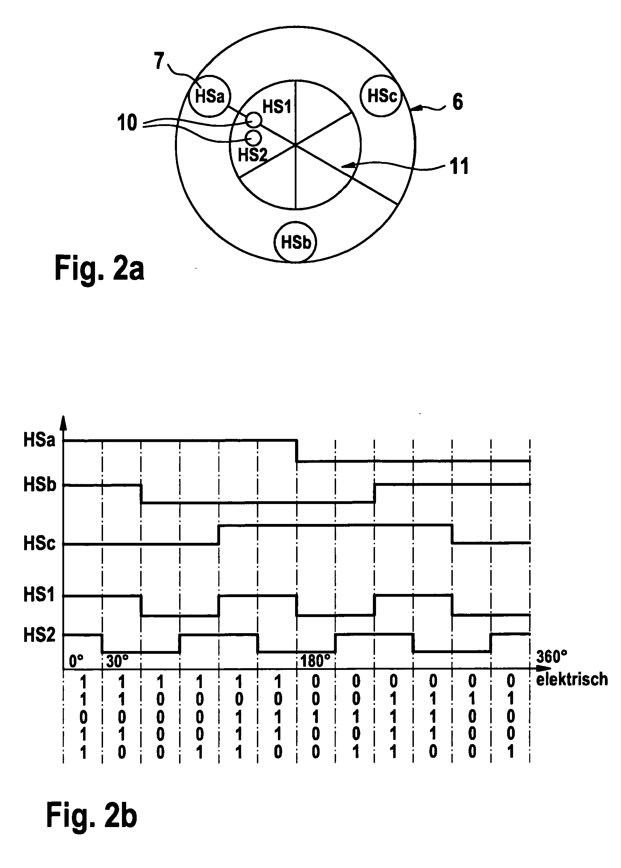

Bei einem Wechsel der Kommutierungsart des EC-Motors oder, wenn aus anderen Gründen eine genauere Lagewinkelerfassung notwendig ist, kann es notwendig sein, die Auflösung des Lagesensorsystems zu verbessern. Dazu kann, wie in Figur 2a schematisch dargestellt, das Lagesensorsystem der Figur 1 mit zwei weiteren Hall-Sensoren 10 und einer weiteren Gebermagnetanordnung 11 vorgesehen werden, um die Winkelauflösung von 60° auf 30° zu verdoppeln. Einer der weiteren Hall-Sensoren 10 ist dabei mit Bezug auf einen der Hall-Sensoren 7 an der ersten Gebermagnetanordnung mit gleichem Phasenwinkel angeordnet. Der Winkelversatz zwischen den weiteren Hall-Sensoren 10 beträgt bezüglich der Rotorachse 30°. Die zweite Gebermagnetanordnung 11 weist im Gegensatz zur ersten Gebermagnetanordnung 6 drei Polpaare auf, die jeweils als Kreissegmente ausgebildet sind, die jeweils einen Winkelbereich von 60° einnehmen und zu dem Polpaar der ersten Gebermagnetanordnung 6 nicht phasenversetzt sind.

In Figur 2b ist ein Signal-Zeit-Diagramm der Ausgangssignale der Hall-Sensoren 7 und der weiteren Hall-Sensoren 10 dargestellt. Man erkennt, dass es für jede Phasenlage der Rotorachse eine eindeutige Ausgangssignalkombination der Hall-Sensoren gibt, so dass jeder Lagewinkel der Rotorachse eindeutig durch die einzelnen Zustände der Ausgangssignale der Hall-Sensoren 7, 10 definiert wird. Durch die eindeutige Zuordnung der Kombination der Ausgangssignale der Hall-Sensoren 7, 10 ist ein Referenzlauf, bei dem ein definierter Nullpunkt angefahren wird, nicht weiter notwendig.

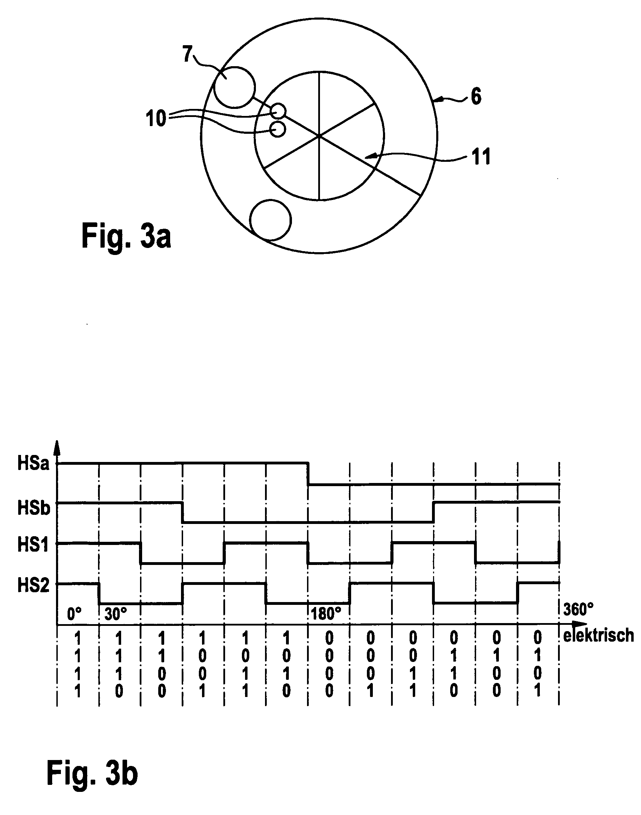

In Figur 3a ist eine schematische Darstellung eines Lagesensorsystems gemäß einer ersten Ausführungsform der Erfindung dargestellt. Gleiche Bezugszeichen wie in den Figuren 1 und 2 entsprechen Elementen gleicher oder ähnlicher Funktion. Im Gegensatz zu dem Lagesensorsystem gemäß dem Stand der Technik, wie es in der Figur 2a dargestellt ist, weist das erfindungsgemäße Lagesensorsystem nur zwei erste Hall-Sensoren 7 an der ersten einpolpaarigen Gebermagnetanordnung 6 auf. Die zwei ersten Hall-Sensoren 7 sind in einem (elektrischen und physikalischen) Winkel von 90° bezüglich der Rotorachse 4 an der ersten Gebermagnetanordnung 6 angeordnet. Diese ermöglicht eine eindeutige Zuordnung der Lagewinkel der Rotorachse in Winkelabschnitten von 90°.

Die zweiten Hall-Sensoren 10 sind so an der zweiten Gebermagnetanordnung 11 angebracht, dass sie einen Winkelversatz von elektrisch 30° aufweisen, wobei einer der zweiten Hall-Sensoren 10 die gleiche physikalische Winkellage (bezüglich der Rotorachse) aufweist, wie einer der ersten Hall-Sensoren 7. Der andere der zweiten Hall-Sensoren 10 weist diesbezüglich eine Winkellage auf, die in dem Winkelbereich des Winkelversatzes von 90° der ersten beiden Hall-Sensoren 7 liegt, d.h. innerhalb des durch die beiden ersten Hall-Sensoren 7 eingeschlossenen Winkelabschnittes liegt, der durch die ersten Hall-Sensoren 7 gebildet wird. Dadurch ist es möglich, ein Lagesensorsystem zur Detektion einer absoluten elektrischen Winkellage einer Rotorachse in einer vorbestimmten Winkelauflösung zur Verfügung zu stellen, das mit einer reduzierten Anzahl von Hall-Sensoren auskommt.

Anstelle einer ersten einpolpaarigen Gebermagnetanordnung kann die erste Gebermagnetanordnung auch mit mehreren Polpaaren (Anzahl j) vorgesehen sein. In diesem Fall sind die zwei ersten Hall-Sensoren so anzuordnen, dass sie einen elektrischen Winkel von 90° einschließen. Der elektrische Winkel von 90° entspricht einem physikalischen Winkel von 90° geteilt durch die Anzahl j der Polpaare der ersten Gebermagnetanordnung. D. h. im Falle von zwei Polpaaren der ersten Gebermagnetanordnung 6 entspricht eine mechanische Umdrehung zwei elektrischen Umdrehungen.

In Figur 3b ist ein Signal-Zeit-Diagramm dargestellt, das den Verlauf der Ausgangssignale der Hall-Sensoren der Ausführungsform der Figur 3a zeigt. Man erkennt, dass für jede absolute Winkellage der Rotorachse ein eindeutiges Muster von Ausgangssignalen vorliegt, so dass beim Starten des Motors die Winkellage auch ohne Anfahren einer Referenzposition erkannt werden kann.

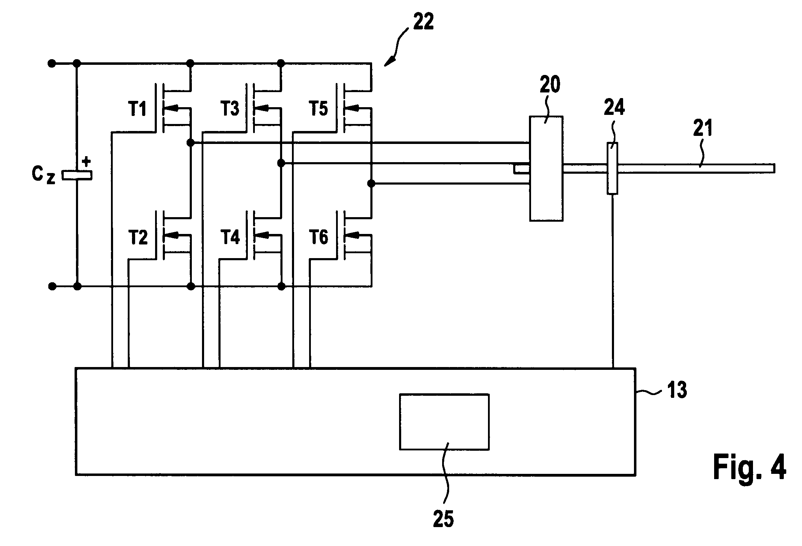

In Figur 4 ist ein Motorsteuerungssystem mit einem EC-Motor 10 dargestellt, der eine Rotorachse 21 antreibt. An der Rotorachse 21 ist ein Lagesensorsystem, wie es z.B. bezüglich der Ausführungsform der Figur 3a beschrieben wurde, angeordnet. Der EC-Motor 10 wird mit Hilfe einer Ansteuereinheit 22 angesteuert, die die Kommutierung der Ansteuersignale für den EC-Motor 10 vornimmt. Die Ansteuereinheit 22 weist sechs Feldeffekttransistoren T1 bis T6 auf, die abhängig von entsprechenden Steuersignalen einer Steuereinheit 13 geöffnet oder geschlossen werden. Die Steuereinheit 13 steuert die Ansteuereinheit 22 abhängig von Sensorsignalen einer Lagesensorsystems 24 an. Dabei ist die Steuereinheit 13 so gestaltet, dass ein Wechsel der Schaltzustände der sechs Transistoren T1 bis T6 bei einem Wechsel der von dem Lagesensorsystem 24 erfassten Winkellage vorgenommen wird. Dies ermöglicht es, auf ein Triggersignal zu verzichten, mit dem die Sensorwerte der Hall-Sensoren in dem Lagesensorsystem 24 erfasst werden. Ein Wechsel eines Zustandes eines der Hall-Sensoren bewirkt somit eine Triggerung der Ansteuersignale für die Ansteuereinheit 22, so dass abhängig von einem Zustandswechsel das Schaltverhalten der sechs Transistoren T1 bis T6 gesteuert werden kann. Dazu kann die Steuereinheit 13 eine Logikeinheit 25 aufweisen, die die Ausgangssignale der Hall-Sensoren logisch verknüpft und in entsprechende Ansteuersignale für die Ansteuereinheit 22 umwandelt.

## Patentansprüche

1. Lagesensorsystem zur Detektion einer absoluten elektrischen Winkellage einer Rotorachse (4) eines Elektromotors (1) in einer vorbestimmten Winkelauflösung W, umfassend:
eine erste Hall-Sensoreinrichtung, die eine erste, an der Rotorachse (4) angeordnete Gebermagnetanordnung (6) mit einer Anzahl j von Polpaaren und zwei erste Hall-Sensoren (7) aufweist, die physikalisch mit einem Winkelversatz von 90° geteilt durch die Anzahl j der Polpaare bezüglich der Rotorachse angeordnet sind, um eine Lagewinkelauflösung der elektrischen Winkellage von 90° zu erreichen, und
eine zweite Hall-Sensoreinrichtung, die eine zweite, an der Rotorachse (4) angeordnete Gebermagnetanordnung (11) mit n Polpaaren und eine Anzahl m von zweiten Hall-Sensoren (10) aufweist, die winkelversetzt bezüglich der Rotorachse (4) zueinander angeordnet sind, wobei die Anordnung und die Anzahl n der Polpaare und die Anordnung und die Anzahl m der zweiten Hall-Sensoren (10) gewählt sind, um innerhalb des Winkelbereichs des Winkelversatzes Winkelabschnitte mit der vorbestimmten Winkelauflösung W eindeutig zu detektieren.

2. Lagesensorsystem nach Anspruch 1, wobei einer der zweiten Hall-Sensoren (10) im selben Winkel bezüglich der Rotorachse angeordnet ist, wie einer der ersten Hall-Sensoren (7).

3. Lagesensorsystem nach Anspruch 1 oder 2, wobei ein weiterer der zweiten Hall-Sensoren (10) in eine Winkellage bezüglich der Rotorachse (4) angeordnet ist, die innerhalb des Winkelversatzes der ersten Hall-Sensoren liegt.

4. Lagesensorsystem nach Anspruch 1, wobei einer der zweiten Hall-Sensoren (10) im selben Winkel bezüglich der Rotorachse (4) angeordnet ist, wie ein Grenzbereich zwischen den Polen eines der Polpaare der ersten Gebermagnetanordnung (6).

5. Lagesensorsystem nach einem der Ansprüche 1 bis 4, wobei die zweite Gebermagnetanordnung (11) drei Polpaare aufweist und wobei zwei zweite Hall-Sensoren (10) vorgesehen sind, wobei die zwei Hall-Sensoren (10) in einem elektrischen Winkel von 30° zueinander bezüglich der Rotorachse (4) angeordnet sind.

6. Lagesensorsystem nach einem der Ansprüche 1 bis 5, wobei eine Auswerteeinheit vorgesehen ist, die mit den ersten (7) und mit den zweiten Hall-Sensoren (10) verbunden ist, um abhängig von den Ausgangssignalen der Hall-Sensoren die absolute elektrische Winkellage bereitzustellen.

7. Motorsteuerungssystem mit einem EC-Motor mit einer Rotorachse(4) und mit dem Lagesensorsystem nach Anspruch 6, wobei die Hall-Sensoreinrichtungen so an der Rotorachse (4) angeordnet sind, dass eine Änderung der detektierten von der Auswerteeinheit ermittelten absoluten Winkellage als Trigger für eine Kommutierung des EC-Motors (1) verwendet wird.

## Claims

1. Position sensor system for detecting an absolute electrical angular position of a rotor axis (4) of an electric motor (1) in a predetermined angular resolution W, comprising:
a first Hall sensor device having a first transmitter magnet arrangement (6) which is arranged on the rotor axis (4) and has a number j of pole pairs and two first Hall sensors (7) which are physically arranged with an angular offset of 90°, divided by the number j of pole pairs, with respect to the rotor axis in order to achieve a position angular resolution of the electrical angular position of 90°, and
a second Hall sensor device having a second transmitter magnet arrangement (11) which is arranged on the rotor axis (4) and has n pole pairs and a number m of second Hall sensors (10) which are arranged with an angular offset relative to one another with respect to the rotor axis (4), the arrangement and number n of pole pairs and the arrangement and number m of second Hall sensors (10) being selected in order to unambiguously detect angular sections with the predetermined angular resolution W within the angular range of the angular offset.

2. Position sensor system according to Claim 1, one of the second Hall sensors (10) being arranged at the same angle with respect to the rotor axis as one of the first Hall sensors (7).

3. Position sensor system according to Claim 1 or 2, a further one of the second Hall sensors (10) being arranged in an angular position with respect to the rotor axis (4) which is within the angular offset of the first Hall sensors.

4. Position sensor system according to Claim 1, one of the second Hall sensors (10) being arranged at the same angle with respect to the rotor axis (4) as a boundary region between the poles of one of the pole pairs of the first transmitter magnet arrangement (6).

5. Position sensor system according to one of Claims 1 to 4, the second transmitter magnet arrangement (11) having three pole pairs and two second Hall sensors (10) being provided, the two Hall sensors (10) being arranged at an electrical angle of 30° relative to one another with respect to the rotor axis (4).

6. Position sensor system according to one of Claims 1 to 5, an evaluation unit being provided and being connected to the first Hall sensors (7) and to the second Hall sensors (10) in order to provide the absolute electrical angular position on the basis of the output signals from the Hall sensors.

7. Engine control system having an EC motor with a rotor axis (4) and with the position sensor system according to Claim 6, the Hall sensor devices being arranged on the rotor axis (4) in such a manner that a change in the detected absolute angular position, which is determined by the evaluation unit, is used as a trigger for commutation of the EC motor (1).

## Revendications

1. Système détecteur de position pour détecter une position angulaire électrique absolue d'un axe de rotor (4) d'un moteur électrique avec une résolution angulaire W prédéfinie, comprenant :
un premier dispositif de détection à effet Hall qui présente un premier arrangement d'aimants de codage (6) disposé sur l'axe de rotor (4) avec un nombre j de paires de pôles et deux premiers capteurs à effet Hall (7), lesquels sont disposés physiquement avec un décalage angulaire de 90° par rapport à l'axe de rotor et séparés par le nombre j de paires de pôles, afin d'obtenir une résolution d'angle de position de 90° pour la position angulaire électrique, et
un deuxième dispositif de détection à effet Hall qui présente un deuxième arrangement d'aimants de codage (11) disposé sur l'axe de rotor (4) avec un nombre n de paires de pôles et un nombre m de deuxièmes capteurs à effet Hall (10), lesquels sont disposés avec un décalage angulaire par rapport à l'axe de rotor (4), la disposition et le nombre n de paires de pôles et la disposition et le nombre m de deuxièmes capteurs à effet Hall (10) étant choisis pour détecter précisément, à l'intérieur de la plage angulaire du décalage angulaire, les portions d'angle qui présentent la résolution angulaire W prédéfinie.

2. Système détecteur de position selon la revendication 1, l'un des deuxièmes capteurs à effet Hall (10) étant disposé sous le même angle par rapport à l'axe du rotor que l'un des premiers capteurs à effet Hall (7).

3. Système détecteur de position selon la revendication 1 ou 2, un autre des deuxièmes capteurs à effet Hall (10) étant disposé par rapport à l'axe du rotor (4) dans une position angulaire qui se trouve à l'intérieur du décalage angulaire des premiers capteurs à effet Hall.

4. Système détecteur de position selon la revendication 1, l'un des deuxièmes capteurs à effet Hall (10) étant disposé sous le même angle par rapport à l'axe du rotor (4) qu'une zone de délimitation entre les pôles de l'une des paires de pôles du premier arrangement d'aimants de codage (6).

5. Système détecteur de position selon l'une des revendications 1 à 4, le deuxième arrangement d'aimants de codage (11) présentant trois paires de pôles et deux deuxièmes capteurs à effet Hall (10) étant prévus, les deux capteurs à effet Hall (10) étant disposés selon un angle électrique de 30° l'un de l'autre par rapport à l'axe du rotor (4).

6. Système détecteur de position selon l'une des revendications 1 à 5, une unité d'interprétation étant prévue, laquelle est reliée avec les premiers (7) et les deuxièmes capteurs à effet Hall (10) pour délivrer la position angulaire électrique absolue indépendamment des signaux de sortie des capteurs à effet Hall.

7. Système de commande de moteur comprenant un moteur EC muni d'un axe de rotor (4) et muni du système détecteur de position selon la revendication 6, les dispositifs capteurs à effet Hall étant disposés sur l'axe de rotor (4) de telle sorte qu'une modification de la position angulaire absolue déterminée par l'unité d'interprétation est utilisée comme déclencheur pour une commutation du moteur EC (1).
